# EUROPEAN PATENT APPLICATION

(11) **EP 4 297 157 A1**
(43) Date of publication of application: **27.12.2023**
(21) Application number: 23178942.1
(22) Date of filing: 13.06.2023
(51) Int. Cl.: H01M 50/207, H01M 50/24, H01M 50/262, H01M 50/291

(54) **BATTERY HOUSING AND BATTERY PACK**

(30) Priority: 21.06.2022 CN 202210702645
(71) Applicant: DONGGUAN POWERAMP TECHNOLOGY LIMITED, Dongguan City, Guangdong Province 523000 (CN)
(72) Inventor: LIU, Xiaofeng, Dongguan City, Guangdong Province, People s Republic of China, 523000 (CN); LI, Changjiang, Dongguan City, Guangdong Province, People s Republic of China, 523000 (CN); WU, Mingjie, Dongguan City, Guangdong Province, People s Republic of China, 523000 (CN); ZHOU, Quan, Dongguan City, Guangdong Province, People s Republic of China, 523000 (CN)
(74) Representative: Icosa

(57) **Abstract**

A battery housing includes: a housing body, an upper cover, and a sealing member. The housing body includes a bottom plate and side walls. The upper cover is disposed above the housing body. The sealing member includes a first portion and a second portion, where the first portion is disposed between the upper cover and the housing body, and the second portion abuts against the upper cover. With the first portion of the sealing member disposed between the upper cover and the housing body and the second portion of the sealing member abutting against the upper cover of the battery housing, the sealing performance and water-proof performance of the battery housing are improved.

## Description

### TECHNICAL FIELD

Embodiments of this application relate to the field of batteries, and in particular, to a battery housing and a battery pack.

### BACKGROUND

With the development of new energies, application of batteries has become wider in people's life, and the safety of batteries has attracted increasing attention. Existing battery housings are mainly plastic housings and aluminum frame housings, most of which are welded structures with high costs and are prone to welding quality problems, for example, water leakage at a welded joint and easy cracking of the welded joint due to falling off. In conclusion, existing battery housings have risks in sealing performance and water-proof performance.

### SUMMARY

To solve the foregoing problems, embodiments of this application provides a battery housing and a battery pack, so as to solve problems of low sealing and water-proof reliability of existing battery housings.

According to a first aspect of some embodiments of this application, a battery housing is provided, including: a housing body, the housing body including a bottom plate and side walls; an upper cover, the upper cover being disposed above the housing body; and a sealing member including a first portion and a second portion, where the first portion is disposed between the upper cover and the housing body, and the second portion abuts against the upper cover.

In a specific embodiment, the upper cover includes a main body and a flange, where the flange protrudes out of an outer peripheral surface of the main body, the flange and the main body form a first groove, and the second portion of the sealing member abuts against the first groove.

In a specific embodiment, the second portion includes a first connecting section and a second connecting section, where the first connecting section connects the second connecting section and the first portion, the first connecting section, the second connecting section, and the first portion form a second groove, and a lower end of the upper cover abuts against the second groove.

In a specific embodiment, the first portion is provided with a protrusion, and in a direction from the bottom plate to the upper cover, the protrusion is located between the housing body and the upper cover.

In a specific embodiment, a plurality of first teeth are provided on a side of the sealing member facing toward the side wall, and in the direction from the bottom plate to the upper cover, distance between adjacent two of the first teeth is greater than length of the first tooth.

In a specific embodiment, a third groove is provided at a root of the first tooth.

In a specific embodiment, a plurality of second teeth are provided on a side of the sealing member away from the side wall.

In a specific embodiment, the battery housing further includes a first connecting member, the sealing member is provided with a first mounting hole, the upper cover is provided with a second connecting member fitting with the first connecting member, and the first connecting member runs through the first mounting hole to connect to the second connecting member.

In a specific embodiment, the second connecting member includes a first blind hole, the first blind hole being threadedly connected to the first connecting member.

According to another aspect of some embodiments of this application, a battery pack is provided. The battery pack specifically includes a battery module and the battery housing according to any one of the foregoing embodiments, where the battery module is disposed in the battery housing.

Some embodiments of this application provide a battery housing and a battery pack containing such battery housing. The battery housing includes a housing body, an upper cover, and a sealing member, where the housing body specifically includes a bottom plate and side walls; the upper cover is disposed above the housing body; and the sealing member specifically includes a first portion and a second portion, where the first portion is disposed between the upper cover and the housing body, and the second portion abuts against the upper cover. The first portion of the sealing member is disposed between the upper cover and the housing body, and the second portion of the sealing member abuts against the upper cover of the battery housing, thereby improving the sealing performance and water-proof performance of the battery housing.

### BRIEF DESCRIPTION OF DRAWINGS

The following accompanying drawings are intended only for illustrative description and interpretation of this application and do not limit the scope of this application. In the drawings:
FIG. 1 is a schematic structural diagram of a battery housing according to an embodiment of this application;
FIG. 1A is a locally enlarged view of position A in FIG. 1;
FIG. 1B is a schematic diagram of a partial structure of an upper cover according to an embodiment of this application;
FIG. 1C is a schematic diagram of a partial structure of a sealing member according to an embodiment of this application;
FIG. 2 is a schematic structural diagram of another battery housing according to an embodiment of this application;
FIG. 2A is a locally enlarged view of position B in FIG. 2;
FIG. 2B is a schematic diagram of a partial structure of another upper cover according to an embodiment of this application;
FIG. 2C is a schematic diagram of a partial structure of another sealing member according to an embodiment of this application; and
FIG. 2D is a locally enlarged view of position C in FIG. 2C.

### Description of reference signs:

101. housing body; 102. upper cover; 103. handle; 111. side wall; 112. bottom plate; 121. flange; 1211. first groove; 122. main body; 1221. first blind hole; 123. second mounting hole; 201. first connecting member; 202. sealing member; 210. first portion; 211. protrusion; 212. first tooth; 213. gap; 214. first mounting hole; 215. third groove; 216. second tooth; 220. second portion; 2201. first connecting section; 2202. second connecting section; and 2203. second groove.

### DESCRIPTION OF EMBODIMENTS

For a clearer understanding of technical features, objects, and effects of some embodiments of this application, some specific implementations of some embodiments of this application are described with reference to the accompanying drawings.

In this specification, "illustrative" means "serving as an instance, example, or illustration", and any figure and implementation described as "illustrative" herein should not be construed as more preferred or more advantageous technical solutions.

For brevity of the accompanying drawings, only parts relevant to this application are schematically illustrated in the drawings and do not represent actual structures of products. In addition, for brevity and ease of understanding of the accompanying drawings, in some accompanying drawings, only one or more of components with like structures or functions are schematically illustrated or marked.

Before a structure of a test apparatus according to some embodiments of this application is described, application scenarios of a battery housing are briefly described with reference to accompanying drawings for ease of understanding.

Existing battery housings are mainly plastic housings and aluminum frame housings with fewer metal plate housings. In addition, an existing metal plate housing forms an entire battery housing by welding. Because the metal plate housing is prone to welding quality problems, for example, weld defects like incomplete weld seam or cracks, the sealing performance of the battery housing cannot be guaranteed, leading to water ingress in the battery housing, thus causing damage to a battery module in the battery housing and affecting the service life of the battery module. In view of this, this application provides a battery housing to solve the foregoing problems.

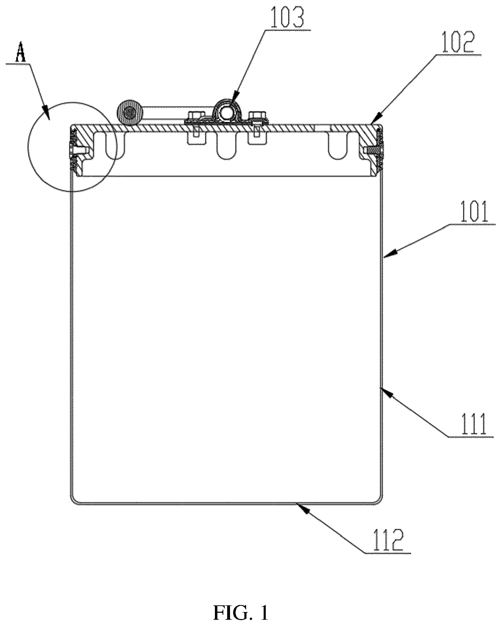

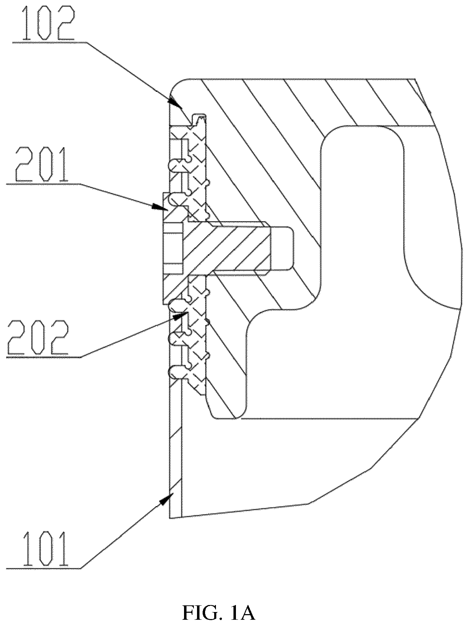

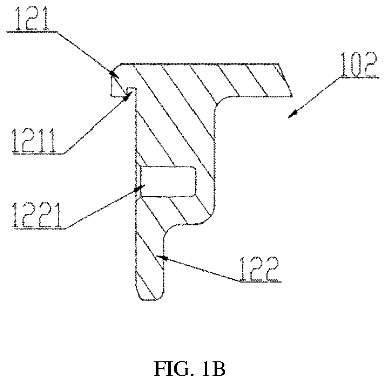

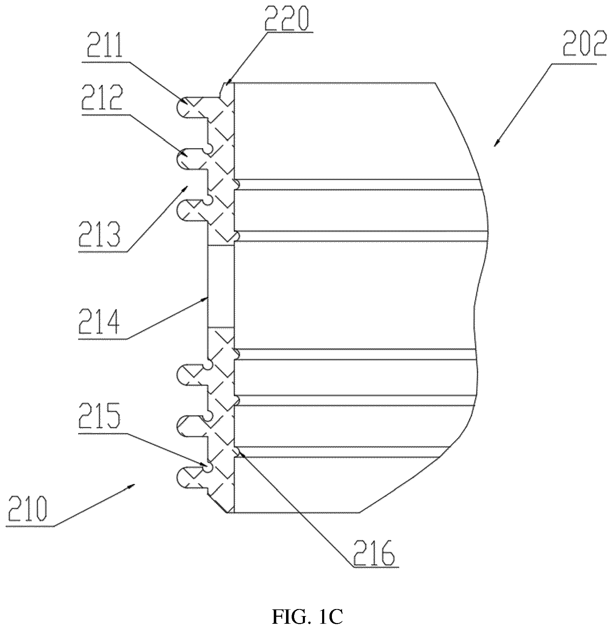

As shown in FIG. 1, FIG. 1 is a schematic structural diagram of a battery housing according to an embodiment of this application. FIG. 1A is provided to help further understand a structure of the battery housing. FIG. 1A is a locally enlarged view of position A in FIG. 1. The battery housing includes a housing body 101, an upper cover 102, and a sealing member 202. The housing body 101 includes a bottom plate 112 and side walls 111. The upper cover 102 is disposed above the housing body 101. The sealing member 202 includes a first portion 210 and a second portion 220, where the first portion 210 is disposed between the upper cover 102 and the housing body 101, and the second portion 220 abuts against the upper cover 102.

According to the battery housing provided in this embodiment of this application, a sealed accommodating cavity is formed between the housing body 101 and the upper cover 102 for placing a battery module. The sealing member 202 is disposed between the housing body 101 and the upper cover 102. The sealing member 202 includes the first portion 210 located between the upper cover 102 and the housing body 101, and the first portion 210 includes a part located between the housing body 101 and the upper cover 102 in a direction from the bottom plate 112 to the upper cover 102 and a part between the side wall 111 of the housing body 101 and the upper cover 102, therefore, a gap at a fitting position between the housing body 101 and the upper cover 102 is effectively sealed, guaranteeing the sealing performance. The second portion of the sealing member 202 abuts against the upper cover 102, further improving the sealing performance, and thereby guaranteeing the overall sealing performance and reliability of the battery housing.

It should be noted that, to further improve the sealing performance of the battery housing, the bottom plate 112 of the housing body 101 and the side walls 111 are integrally formed without gaps. In this way, the sealing performance can be guaranteed, and such gapless structure helps to improve the force-bearing performance of the structure, thus prolonging the service life. The housing body 101 may be a metal plate housing body or a housing body 101 formed in other processes. This is not limited in this application.

The side wall 111 of the housing body 101 has an opening at an end away from the bottom plate 112 to facilitate placing of a battery module and the like, and the upper cover 102 is configured to close the opening. For convenient movement of the battery housing, a handle 103 is provided at the top of the upper cover 102. The handle 103 and the upper cover 102 may be detachably connected in connection manners such as threaded connection and pin connection, or may be fixedly connected in connection manners such as welding. The connection manner between the handle 103 and the upper cover 102 is not limited in this application.

To seal the gap between the housing body 101 and the upper cover 102, the sealing member 202 is disposed therebetween. To allow reliable fitting of the upper cover 102 and the sealing member 202 with the housing body 101 and prevent separation, the battery housing further includes a first connecting member 201, the sealing member 202 is provided with a first mounting hole 214, the upper cover 102 is provided with a second connecting member fitting with the first connecting member 201, and the first connecting member 201 runs through the first mounting hole 214 to connect to the second connecting member.

Provision of the first connecting member 201 to implement detachable connection between the upper cover 102 and the housing body 101 not only ensures reliable connection but also allows regular inspection, maintenance, or replacement of a battery module placed in the battery housing as required. Provision of the first mounting hole 214 in the sealing member 202 allows the first connecting member 201 to run through the sealing member 202 without damaging the rest part of the sealing member 202, thus avoiding affecting the sealing performance of the battery housing.

In a possible embodiment, the upper cover 102 may be processed in different forming manners such as a casting process or a metal plate process.

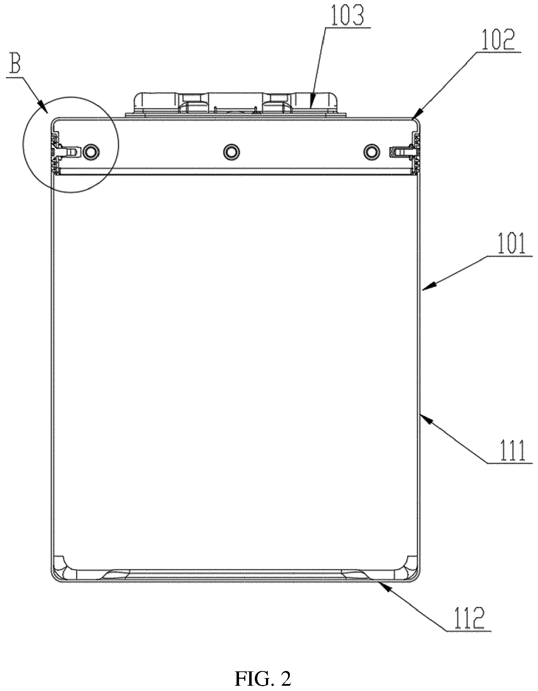

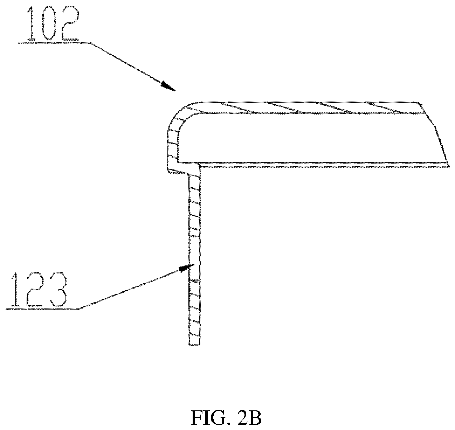

For example, FIG. 1B shows an upper cover 102 formed in the casting process, and FIG. 2B shows an upper cover 102 formed in the metal plate process.

The upper cover 102 includes a main body 122 and a flange 121. The flange 121 protrudes out of an outer peripheral surface of the main body 122, and a first groove 1211 is formed between the flange 121 and the main body 122. The second portion 220 of the sealing member 202 abutting against the first groove 1211 allows better sealing effect of fitting between the sealing member 202 and the upper cover 102, and avoids water and other contaminants entering the battery housing from outside through the fitting clearance between the upper cover 102 and the sealing member 202, thus ensuring the sealing performance and water-proof performance of the battery housing.

It should be noted that compared with cast iron, cast aluminum alloy has better corrosion resistance, strength, and casting performance as well as smaller density, and therefore features lighter weight when volume is the same, which can further reduce transportation costs. Therefore, cast aluminum alloy can be selected for the upper cover 102. A flexible material is selected for the sealing member 202, which can absorb fitting tolerance between the housing body and the upper cover.

In a specific embodiment, the second connecting member includes a first blind hole 1221, and the first blind holes 1221 are symmetrically distributed along a circumferential direction of the upper cover 102 to avoid stress concentration and improve the strength of the upper cover 102. As compared with a connection manner between a through hole and a connection member in the prior art, the first blind hole 1221 is fitted to the first connecting member 201 in this embodiment of this application, featuring more reliable sealing performance and water-proof performance. The first blind hole 1221 may be fitted to the first connecting member 201 using threads. This is not limited in this application.

In an implementation, as shown in FIG. 1C, the first portion 210 of the sealing member 202 is provided with a protrusion 211, and in a direction from the bottom plate 112 to the upper cover 102, the protrusion 211 is located between the housing body 101 and the upper cover 102. The housing body 101, the protrusion 211, and the upper cover 102 are tightly fitted together through clamping between the upper cover 102 and the housing body 101, so as to reduce the possibility of liquids and other contaminants entering the battery housing from outside, thus ensuring the sealing performance and water-proof performance of the battery housing.

In an example, to further improve the sealing performance of the battery housing, a plurality of first teeth 212 are provided on a side of the sealing member 202 facing toward the side wall 111, and in the direction from the bottom plate 112 to the upper cover 102, length of a gap 213 between adjacent two of the first teeth 212 is greater than length of the first tooth 212 (for example, length in a vertical direction in FIG. 1C). To be specific, when the housing body 101 is tightly connected to the upper cover 102, the plurality of first teeth 212 are in tight press-fit with the housing body 101 to implement waterproofing of a fitting surface between the sealing member 202 and the housing body 101. Even if a small amount of liquid enters the housing body 101, as the length of the gap 213 formed between adjacent two of the first teeth 212 is greater than the length of the first tooth 212, water and other contaminants entering the battery housing from outside can be accommodated, further improving the water-proof performance.

Preferably, to facilitate assembly fitting between the housing body 101 and the upper cover 102, a third groove 215 is provided at a root of the first tooth 212. Provision of the third groove 215 at the root of the first tooth 212 provides a space for deformation for the first tooth 212, allowing easier deformation of the first tooth 212, and thereby facilitating the assembly fitting between the housing body 101 and the upper cover 102. It should be noted that FIG. 1C shows only a fitting relationship between the sealing member 202, the upper cover 102, and the housing body 101, and when the sealing member 202 is mounted into the housing body 101, the first tooth 212 may deform and abut against an inner wall of the housing body 101.

In a specific embodiment, to further guarantee the sealing performance of the battery housing, second teeth 216 are provided on a side of the sealing member 202 away from the housing body 101. Specifically, height of the second tooth 216 is less than height of the first tooth 212, and a pressing force between the sealing member 202 and the upper cover 102 allows tight press-fit between the second tooth 216 and the upper cover 102, thus implementing waterproofing of a fitting surface between the sealing member 202 and the main body 122 of the upper cover 102.

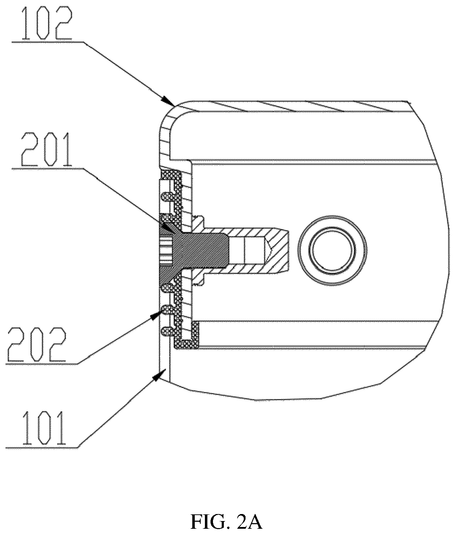

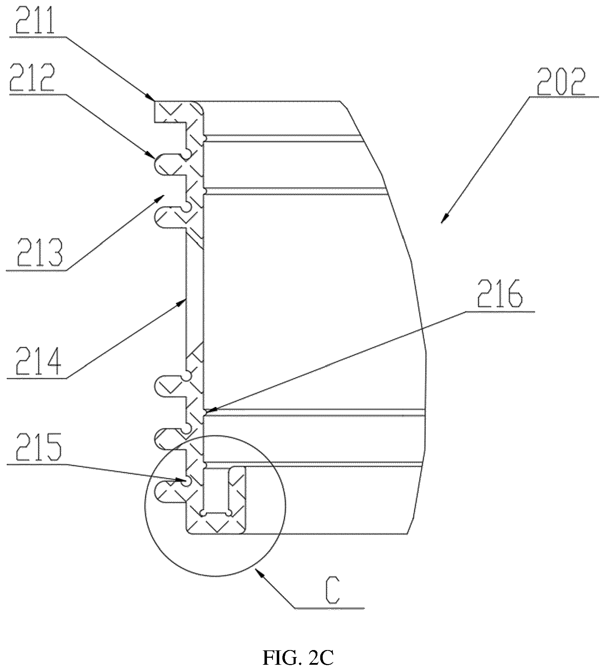

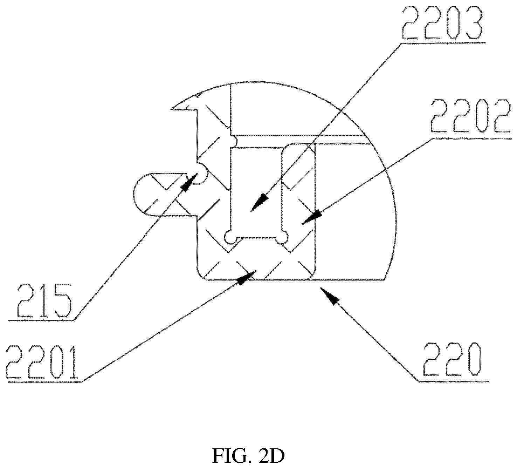

As shown in FIGs. 2 to 2C, for the metal plate upper cover, the upper cover 102 is provided with a second mounting hole 123 for the first connecting member 201 to run through the second mounting hole 123, implementing detachable connection between the housing and the upper cover 102, where the second mounting hole 123 is part of the second connecting member. In addition, the second connecting member further includes a mounting member. The mounting member corresponds to a position of the second mounting hole 123 and is fixedly connected to an inner wall of the upper cover 102, and the mounting member is provided with a second blind hole, the second blind hole communicating with the second mounting hole 123. The first connecting member 201 runs through the second mounting hole 123 to be connected to the second blind hole, further guaranteeing the sealing performance of internal connection between the upper cover 102 and the housing body 101.

To adapt to the metal plate upper cover, the second portion 220 of the sealing member 202 includes a first connecting section 2201 and a second connecting section 2202. The first connecting section 2201 connects the second connecting section 2202 and the first portion 210, the first connecting section 2201, the second connecting section 2202, and the first portion 210 form a second groove 2203, and a lower end of the upper cover 102 abuts against the second groove 2203.

Specifically, before the upper cover 102 and the housing body 101 are assembled, the lower end of the upper cover 102 is snapped into the second groove 2203, such that the upper cover 102 and the sealing member 202 as a whole are assembled with the housing body 101. Provision of the second groove 2203 allows easier assembly of the upper cover 102, the sealing member 202, and the housing body 101 and avoids change of relative positions of the sealing member 202 and the upper cover 102 during assembling. In addition, the lower end of the upper cover 102 being snapped into the second groove 2203 further guarantees the sealing performance of the battery housing.

According to a second aspect of some embodiments of this application, a battery pack is provided. The battery pack specifically includes a battery module and the battery housing in any one of the foregoing embodiments, where the battery module is disposed in the battery housing.

For the battery components provided in some embodiments of this application, provision of the first portion 210 of the sealing member 202 between the upper cover 102 and the housing body 101 improves the sealing performance and water-proof performance of the battery housing; and the second portion 220 of the sealing member 202 abutting against the upper cover 102 of the battery housing further improves the sealing performance and water-proof performance of the battery housing and avoids water and other contaminants entering the battery housing from outside, which in turn damages the battery module.

It should be understood that although this specification is described in accordance with various embodiments, not every embodiment contains only a separate technical solution. Such description manner in this specification is only for clarity, persons skilled in the art should take this specification as a whole, and the technical solutions in some embodiments can also be properly combined to form other implementations that can be understood by those skilled in the art.

## Claims

1. A battery housing, comprising:
a housing body (101), the housing body (101) comprising a bottom plate (112) and side walls (111);
an upper cover (102), the upper cover (102) being disposed above the housing body (101); and
a sealing member (202), **characterized in that**, the sealing member(202) comprising a first portion (210) and a second portion (220), the first portion (210) is disposed between the upper cover (102) and the housing body (101), and the second portion (220) abuts against the upper cover (102).

2. The battery housing according to claim 1, **characterized in that**, the upper cover (102) comprises a main body (122) and a flange (121), the flange (121) protrudes out of an outer peripheral surface of the main body (122), the flange (121) and the main body (122) form a first groove (1211), and the second portion (220) of the sealing member (202) abuts against the first groove (1211).

3. The battery housing according to claim 1, **characterized in that**, the second portion (220) comprises a first connecting section (2201) and a second connecting section (2202), the first connecting section (2201) connects the second connecting section (2202) and the first portion (210); the first connecting section (2201), the second connecting section (2202), and the first portion (210) form a second groove (2203); and a lower end of the upper cover (102) abuts against the second groove (2203).

4. The battery housing according to any one of claims 1 to 3, **characterized in that**, the first portion (210) is provided with a protrusion (211); and in a direction from the bottom plate (112) to the upper cover (102), the protrusion (211) is located between the housing body (101) and the upper cover (102).

5. The battery housing according to claim 4, **characterized in that**, a side of the sealing member (202) facing toward the side wall (111) is provided with a plurality of first teeth(212); and in the direction from the bottom plate (112) to the upper cover (102), a distance between two adjacent first teeth (212) is greater than a length of each of the two first teeth (212).

6. The battery housing according to claim 5, **characterized in that**, a third groove (215) is provided at a root of the first tooth (212).

7. The battery housing according to claim 5, **characterized in that**, a side of the sealing member (202) facing away from the side wall (111) is provided with a plurality of second teeth (216).

8. The battery housing according to claim 7, **characterized in that**, height of the second tooth (216) is less than height of the first tooth(212).

9. The battery housing according to claim 1, **characterized in that**, the battery housing further comprises a first connecting member (201); the sealing member (202) is provided with a first mounting hole (214); the upper cover (102) is provided with a second connecting member fitting with the first connecting member (201); and the first connecting member (201) runs through the first mounting hole (214) to connect to the second connecting member.

10. The battery housing according to claim 9, **characterized in that**, the second connecting member comprises a first blind hole (1221), the first blind hole (1221) being threadedly connected to the first connecting member (201).

11. The battery housing according to claim 10, **characterized in that**, the first blind holes(1221) are symmetrically distributed along a circumferential direction of the upper cover(102).

12. The battery housing according to claim 1, **characterized in that**, the bottom plate(112) and the side walls(111) are integrally formed.

13. The battery housing according to claim 1, **characterized in that**, the housing body(101) is processed in a metal plate process.

14. The battery housing according to claim 1, **characterized in that**, the upper cover(102) is processed in a casting process or a metal plate process.

15. A battery pack, **characterized in that**, comprising a battery module and the battery housing according to any one of claims 1 to 14, the battery module is disposed in the battery housing.
